# EUROPÄISCHE PATENTSCHRIFT

(11) **EP 2 002 771 B1**
(45) Veröffentlichungstag und Bekanntmachung des Hinweises auf die Patenterteilung: **10.08.2011**
(21) Anmeldenummer: 08010603.2
(22) Anmeldetag: 11.06.2008
(51) Int. Cl.: A47J 43/25, A47J 42/14

(54) **Reibe**
Grater
Rape

(30) Priorität: 14.06.2007 DE 102007028047
(43) Veröffentlichungstag der Anmeldung: 17.12.2008
(73) Patentinhaber: Leifheit AG, 56377 Nassau (DE)
(72) Erfinder: Klotz, Markus, 56357 Hainau (DE); Wörsdörfer, Berno, 56414 Obererbach (DE); Zens, Detlef, 57632 Burglahr (DE)
(74) Vertreter: Bungartz, Klaus Peter

(56) Entgegenhaltungen:
- EP-A- 1 541 073
- DE-A1-102006 033 216
- DE-C- 10 510
- DE-C- 177 061
- FR-A- 771 391

## Beschreibung

Die Erfindung betrifft eine Reibe für Nahrungsmittel, insbesondere als Käsereibe, mit
- einem hohlzylindrischen Gehäuse,
- einer in dem Gehäuse angeordneten Aufnahme mit einem Innenraum zum Aufnehmen für das zu reibende Gut,
- einer zum Gehäuse drehfesten angeordneten Schneidscheibe,
- einen Mitnehmer, der im Innenraum der Aufnahme und außerhalb der Drehachse drehfest zur Aufnahme angeordnet ist,
wobei die Aufnahme innerhalb des Gehäuses um eine durch die Mittelachse des hohlzylindrischen durch den Innenraum des Gehäuses verlaufende Drehachse relativ zum Gehäuse und damit zur die Schneidscheibe drehbar gelagert ist und in die Aufnahme ein Stempel als Andrückstempel passgenau zur Übertragung von Drehkräften einführbar ist.

Eine derartige Reibe ist aus der WO 02/09565 A1 bekannt. Sie besteht im Wesentlichen aus einem zylindrischen Behälter zur Aufnahme des Reibgutes und einer am Boden dieses Gehäuses angeordneten Schneidscheibe, über die das Reibgut unter Anwendung einer Druckkraft und getrieben von einem Mitnehmer gerieben wird. Der Mitnehmer ist bei dieser Ausgestaltung als mittige Scheibe ausgebildet, der den Hohlzylinder in zwei Bereiche unterteilt. Das Reibgut wird dann über einen zweigeteilten Stempel gegen die Schneidplatte angestellt, wobei der Stempel einen mittigen Schlitz aufweist, in den der Mitnehmer eingeführt ist Diese Ausgestaltung vermeidet zwar sicher, dass sich das Schneidgut mitdreht, hat aber den Nachteil, dass das Schneidgut in kleinere Stücke zerkleinert werden muss, die auf beiden Seiten des Mitnehmers in die Aufnahme eingeführt werden können.

Weitere Reiben mit einer relativ zu einer Reibgutaufnahme drehbar gelagerten Schneidscheibe sind weithin bekannt. Reiben dieser Art weisen im Wesentlichen dasselbe Funktionsprinzip auf. Beispielsweise ist aus DE 201 17 358 U1 eine solche Universalreibe zur Verarbeitung von Nahrungsmitteln bekannt. Die Universalreibe weist ein im Wesentlichen zylinderförmiges Aussenbehältnis mit einer unteren und oberen Öffnung auf, wobei das Aussenbehältnis im Bereich der unteren Öffnung mit einer Messerscheibe verschließbar ist. Es ist ein Stempel vorgesehen, der in die obere Öffnung einführbar ist, mit Gewindemitteln, die bei einer Drehung des Stempels um eine Längsachse eine Axialbewegung bewerkstelligen. In das Außenbehältnis ist ein im wesentlichen zylinderförmiges Innenbehältnis mit einer Querwand oder einem Steg zur Aufnahme der zu verarbeitenden Nahrungsmittel drehbar aufgenommen, wobei der Stempel eine zur Querwand oder Steg korrespondierende Schlitzung besitzt, in die die Querwand oder der Steg im Betriebszustand eintaucht und wobei die Eingriffs-Mittel im Bereich der oberen Öffnung des Aussenbehältnisses angeordnet sind. Durch Drehung des Innenbehältnisses samt dem Stempel relativ zum Aussenbehältnis wird der Reibvorgang vollzogen. Auch FR 2 685 863 A1 offenbart eine solche Reibe jedoch mit einem anderen Stempelvortriebsmechanismus.

Schließlich sind Reiben in Form Lebensmittelmühlen zu, Beispiel aus der FR 771 391 A, der DE 10 2006 0033216 A1, der DE 177 061 C, der DE 10 510 C oder der EP 1 514 073 A bekannt. Hier ist eine Antriebswelle für eine Schneidscheibe oder ein Mahlwerkzeug mittig im Gehäuse angeordnet, wobei je nach Einsatzzwecke der Mitnehmer scheibenartig den Innenraum des Gehäuses (z.B. DE 10 2006 0033216 A1) ragt oder durch Druckelemente ersetzt ist.

Die bekannten Reiben haben somit den Nachteil, dass das zu reibende Gut in sehr kleine Stücke zerteilt werden muss, damit es in die Aufnahme der Reibe passt. Dies bedeutet zusätzlichen Arbeitsaufwand uns ist insbesondere bei Nahrungsmitteln störend, die schwieriger zu zerteilen sind, wie beispielsweise Hartkäse.

Es ist die Aufgabe der vorliegenden Erfindung, eine Reibe bereitzustellen, die größere Reibgutstücke aufnehmen und verarbeiten kann, die jedoch gleichzeitig handliche Außenabmessungen aufweist.

Die Aufgabe wird durch eine Reibe gelöst, die dadurch gekennzeichnet ist, dass der Mitnehmer durch eine Abflachung der Grundform des Innenraumes gebildet ist und der Innenraum im Bereich der Drehachse frei von Bauteilen ist.

Erfindungsgemäß wurde erkannt, dass der Mitnehmer weder als Querwand noch durch die Drehachse verlaufen muss, um ein gutes Zerkleinerungsergebnis zu erzielen. Vielmehr ist die Relativbewegung zwischen dem zu reibenden Gut und der Messerscheibe selbst dann noch ausreichend gut, wenn der Mitnehmer im Randbereich des Innenraumes weit weg von der Drehachse angeordnet ist.

Es sei klargestellt, dass im Rahmen dieser Anmeldung der Begriff Drehachse im mathematischen Sinn als gedachte Gerade verwendet wird und nicht im Sinne einer Drehwelle, die Kräfte aufnehmen kann.

Vorzugsweise weist die Aufnahme einen einzigen Innenraum zum Aufnehmen des zu reibenden Gutes auf. Diese Ausführung erlaubt es große Stücke des zu reibenden Gutes in den Innenraum einzubringen. Vorzugsweise ist der Innenraum im Bereich der Drehachse frei von jeglichen Bauteilen, wie beispielsweise Vortriebsspindeln für einen Andrückmechanismus.

Es hat sich gezeigt, dass bei einer Reibe bei der der Mitnehmer derart angeordnet ist, dass mehr als 90 %, des Innenraumes zur Aufnahme des zu reibenden Gutes zur Verfügung steht ein absolut akzeptables Zerkleinerungsergebnis erzielt wird. In Abhängigkeit vom zu reibenden Gut kann vorgesehen sein, dass mehr als 60%, ggf. mehr als 70 %, insbesondere mehr als 80%, ganz insbesondere mehr als 90% der Grundform des - vorzugsweise einzigen - Innenraumes zur Aufnahme des zu reibenden Gutes zur Verfügung steht.

Bei einer besonderen Ausführung ist vorgesehen, weist der Innenraum eine zylindrische Grundform aufweist. Diese Ausführung erlaubt ein Gehäuse mit einer guten Haptik. Es kann jedoch auch vorgesehen sein, dass der Innenraum eine polyederförmige Grundform aufweist. Die polyederförmige Grundform kann vorteilhafter Weise derart gewählt sein, dass ihre Vorsprünge als Mitnehmer wirken. Beispielsweise kann der Mitnehmer durch eine Abflachung der Grundform des Innenraumes gebildet sein.

Bei einer besonderen Ausführung ist der Innenraum im Querschnitt kreisförmig. Bei dieser Ausführung kann vorteilhaft vorgesehen sein, dass der Mitnehmer entlang einer Sekante zum kreisförmigen Querschnitt verläuft. Bei einer besonderen Ausführung ist vorgesehen, dass der Mitnehmer in einer Mitnehmerebene angeordnet ist, die parallel zu der Ebene ist, durch die Drehachse verläuft.

Bei einer besonderen Ausführung der erfindungsgemäßen Reibe ist der Mitnehmer als Wand ausgebildet. Der Mitnehmer kann jedoch auch als Wall oder als Dom ausgebildet sein. Bei einer besonderen Ausführung ist vorgesehen, dass der Mitnehmer derart ausgebildet ist, dass er während der Relativdrehbewegung eine zur Schneidscheibe gerichtete Kraft auf das zu reibende Gut ausübt.

Vorzugsweise ist der Mitnehmer derart dimensioniert ist, dass er sich über die gesamte Längserstreckung der Aufnahme erstreckt.

Bei einer besonderen Ausführung ist vorgesehen, ist vorgesehen dass der Mitnehmer abnehmbar ist. Dies vereinfacht die Reinigung der Reibe. Darüber hinaus kann vorgesehen sein, dass unterschiedliche - vorzugsweise unterschiedlich große - Mitnehmer in den Innenraum einsetzbar sind. Hierdurch wird eine besonders Gute Anpassbarkeit der Reibe an die jeweiligen Eigenschaften des zu reibenden Gutes erzielt.

Bei einer besonderen Ausführung ist ein Stempel vorgesehen ist, der in den Innenraum der Aufnahme einführbar ist. Vorteilhafter Weise kann der Stempel als Andrückstempel ausgeführt sein, mit dem das zu reibende Gut auf die der Schneidscheibe drückbar ist.

Bei einer besonderen Ausführung ist vorgesehen, bei der Stempel auch zum Übertragen von Drehkräften verwendet werden kann, ist vorgesehen, dass der Stempel drehfest in den Innenraum der Aufnahme einführbar ist. Um ein möglicht großflächiges Andrücken zu ermöglichen kann der derart ausgebildet sein, dass er passgenau in den Innenraum der Aufnahme einführbar ist.

Bei einer besonderen Ausführung ist vorgesehen, ist der Stempel hohl ausgeführt. Er kann beispielsweise als Vorratsbehälter und/oder Streubehälter ausgeführt sein.

Die Reibe ist in einer vorteilhaften Ausführung als Handgerät ausgeführt, das vom Benutzer während des Zerkleinerungsvorganges frei bewegt werden kann. In dieser Ausführung ist vorteilhafter Weise weder eine Tischbefestigung oder eine Wandbefestigung nötig, so dass die Reibe besonders flexibel einsetzbar ist.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: eine erfindungsgemäße Reibe in einer Explosionsdarstellung,
- Fig. 2: die Aufnahme der erfindungsgemäßen Reibe, und
- Fig. 3: die Aufnahme einer anderen erfindungsgemäßen Reibe

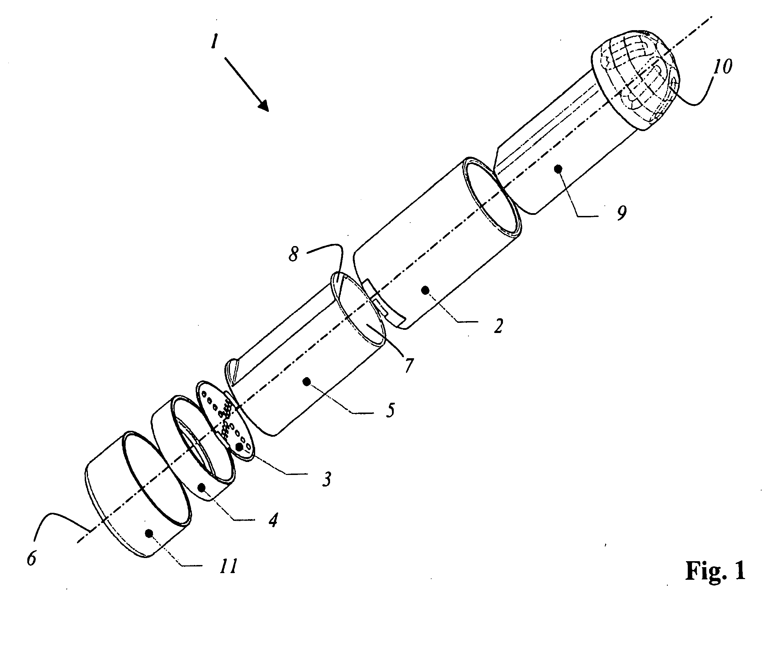

Fig. 1 zeigt eine erfindungsgemäße Reibe 1 in einer Explosionsdarstellung. Die Reibe 1 weist ein Gehäuse 2 auf, das als Hohlzylinder ausgeführt ist. Am unteren Ende der Gehäuses 2 ist eine Schneidscheibe 3 drehfest zum Gehäuse 2 angeordnet und mit einem Verschlussring 4 am Gehäuse - wieder abnehmbar - fixiert. Innerhalb des Gehäuses 2 ist eine Aufnahme 5 für das zu reibende Gut angeordnet. Die Aufnahme 5 ist innerhalb des Gehäuses 2 um eine Drehachse 6, nämlich der Mittelachse des Hohlzylinders, relativ zum Gehäuse 2 und damit relativ zur Schneidscheibe 3, drehbar gelagert. Die Drehachse 6 verläuft durch den Innenraum 7 der Aufnahme 5. Im Innenraum 7 der Aufnahme 5 ist ein Mitnehmer 8 außerhalb der Drehachse 6 und drehfest zur Aufnahme 5 angeordnet. In die Aufnahme 5 ist ein Stempel 9, der als Andrückstempel ausgeführt ist, einführbar. Der Stempel 9 ist derart ausgeformt, dass er sich passgenau zur Übertragung von Drehkräften in die Aufnahme einfügt. Der Stempel 9 weist einen Griff 10 auf. Es ist ein Auffangbehälter 11 zum Auffangen des geriebenen Gutes vorgesehen, der lösbar an dem Verschlussring 4 des Gehäuses 2 festlegbar ist.

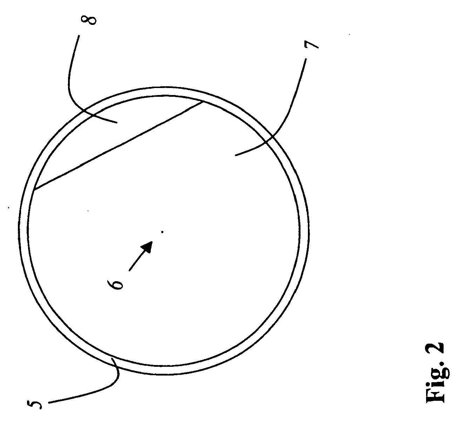

Fig. 2 zeigt die Aufnahme 5 der erfindungsgemäßen Reibe 1. Im Innenraum 7 der Aufnahme 5 ist ein Mitnehmer 8 außerhalb der Drehachse 6 und drehfest zur Aufnahme 5 angeordnet. Der Mitnehmer 8 ist als Abflachung der im Querschnitt kreisförmigen Grundform der Aufnahme 5 ausgebildet und entlang einer Sekante an den kreisförmigen Querschnitt angeordnet.

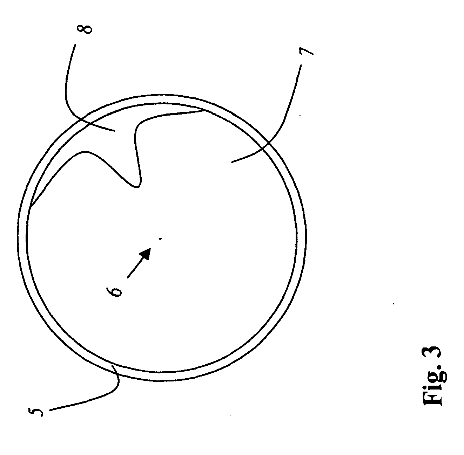

Fig. 3 zeigt die Aufnahme einer anderen erfindungsgemäßen Reibe Im Innenraum 7 der Aufnahme 5 ist ein Mitnehmer 8 außerhalb der Drehachse 6 und drehfest zur Aufnahme 5 angeordnet. Der Mitnehmer 8 ist als Wall ausgebildet, der vom Rand Aufnahme 5 in den Innenraum 7 ragt.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste

- 1: Reibe
- 2: Gehäuse
- 3: Schneidscheibe
- 4: Verschlussring
- 5: Aufnahme
- 6: Drehachse
- 7: Innenraum
- 8: Mitnehmer
- 9: Stempel
- 10: Griff
- 11: Auffangbehälter

## Patentansprüche

1. Reibe (1) für Nahrungsmittel, insbesondere als Käsereibe, mit
• einem hohlzylindrischen Gehäuse (2),
• einer in dem Gehäuse (2) angeordneten Aufnahme (5) mit einem Innenraum (7) zum Aufnehmen für das zu reibende Gut,
• einer zum Gehäuse (2) drehfesten angeordneten Schneidscheibe (3),
• einen Mitnehmer (8), der im Innenraum (7) der Aufnahme (5) und außerhalb der Drehachse (6) drehfest zur Aufnahme angeordnet ist,
wobei die Aufnahme (5) innerhalb des Gehäuses (2) um eine durch die Mittelachse des hohlzylindrischen durch den Innenraum (7) des Gehäuses (2) verlaufende Drehachse (6) relativ zum Gehäuse (2) und damit zur die Schneidscheibe (3) drehbar gelagert ist und in die Aufnahme (5) ein Stempel (9) als Andrückstempel passgenau zur Übertragung von Drehkräften einführbar ist, **dadurch gekennzeichnet, dass**
der Mitnehmer (8) durch eine Abflachung der Grundform des Innenraumes (7) gebildet ist und der Innenraum im Bereich der Drehachse frei von Bauteilen ist.

2. Reibe (1) nach Anspruch 1, **dadurch gekennzeichnet, dass** die Aufnahme (5) einen einzigen Innenraum (7) zum Aufnehmen des zu reibenden Gutes aufweist.

3. Reibe (1) nach einem der Ansprüche 1 oder 2, **dadurch gekennzeichnet, dass** der Innenraum (7) im Querschnitt kreisförmig ist und dass der Mitnehmer (8) entlang einer Sekante zum kreisförmigen Querschnitt verläuft.

4. Reibe (1) nach einem der Ansprüche 1 oder 2, **dadurch gekennzeichnet, dass** der Innenraum (7) eine polyederförmige Grundform aufweist.

5. Reibe (1) nach einem der Ansprüche 1 bis 4, **dadurch gekennzeichnet, dass** der Mitnehmer (8) als Wand der Aufnahme (5) ausgebildet ist.

6. Reibe (1) nach einem der Ansprüche 1 bis 5, **dadurch gekennzeichnet, dass** der Mitnehmer (8) in einer Mitnehmerebene angeordnet ist, die parallel zu der Ebene ist, durch die Drehachse (6) verläuft.

7. Reibe (1) nach einem der Ansprüche 1 bis 6, **dadurch gekennzeichnet, dass** der Mitnehmer (8) derart angeordnet ist, dass mehr als 60 %, vorzugsweise mehr als 70 %, insbesondere mehr als 80%, ganz insbesondere mehr als 90% der Grundform des Innenraumes (7) zur Aufnahme des zu reibenden Gutes zur Verfügung steht.

8. Reibe (1) nach einem der Ansprüche 1 bis 7, **dadurch gekennzeichnet, dass** der Mitnehmer (8) derart dimensioniert ist, dass er sich über die gesamte Längserstreckung der Aufnahme (5) erstreckt.

9. Reibe (1) nach einem der Ansprüche 1 bis 8, **dadurch gekennzeichnet, dass** der Mitnehmer (8) abnehmbar ist.

10. Reibe (1) nach einem der Ansprüche 1 bis 9, **dadurch gekennzeichnet, dass** der Stempel (9) hohl ausgeführt ist.

11. Reibe (1) nach einem der Ansprüche 1 bis 9, **dadurch gekennzeichnet, dass** der Stempel (9) als Vorratsbehälter und/oder Streubehälter ausgeführt ist.

## Claims

1. A grater (1) for food, in particular as cheese grater, comprising
• a hollow-cylindrical housing (2),
• a receptacle (5) which is arranged in the housing (2) and has an interior space (7) for receiving the goods to be grated,
• a cutting disk (3) which is arranged in a rotationally fixed manner with respect to the housing (2),
• an actuator (8) which is arranged in the interior space (7) of the receptacle (5) in a rotationally fixed manner with respect to the receptacle and outside of the rotational axis (6),
wherein the receptacle (5) is mounted within the housing (2) to be rotatable relative to the housing (2) and thus to the cutting disk (3) about a rotational axis (6) running through the center axis of the interior space (7) of the hollow-cylindrical housing (2), and a punch (9) as pressing punch can be fittingly inserted into the receptacle (5) for transmitting of torsional forces, **characterized in that**
the actuator (8) is formed by a flat of the basic form of the interior space (7) and the interior space is free from components in the region of the rotational axis.

2. The grater (1) according to claim 1, **characterized in that** the receptacle (5) has a single interior space (7) for receiving the goods to be grated.

3. The grater (1) according to claim 1 or claim 2, **characterized in that** the interior space (7) has a circular cross-section and that the actuator (8) runs along a secant to the circular cross-section.

4. The grater (1) according to claim 1 or claim 2, **characterized in that** the interior space (7) has a polyhedral basic form.

5. The grater (1) according to any one of the claims 1 to 4, **characterized in that** the actuator (8) is formed as wall of the receptacle (5).

6. The grater (1) according to any one of the claims 1 to 5, **characterized in that** the actuator (8) is arranged in an actuator plane which is parallel to the plane through which the rotational axis (6) runs.

7. The grater (1) according to any one of the claims 1 to 6, **characterized in that** the actuator (8) is arranged in such a manner that more than 60%, preferably more than 70%, in particular more than 80% and particularly preferred more than 90% of the basic form of the interior space (7) is available for receiving the goods to be grated.

8. The grater (1) according to any one of the claims 1 to 7, **characterized in that** the actuator (8) is dimensioned in such a manner that the same extends over the entire longitudinal extension of the receptacle (5).

9. The grater (1) according to any one of the claims 1 to 8, **characterized in that** the actuator (8) is removable.

10. The grater (1) according to any one of the claims 1 to 9, **characterized in that** the punch (9) is formed hollow.

11. The grater (1) according to any one of the claims 1 to 9, **characterized in that** the punch (9) is configured as storage container and/or shaker container.

## Revendications

1. Râpe (1) pour des aliments, notamment râpe de découpe en cubes, avec
• un boîtier (2) cylindrique creux,
• un logement (5) disposé dans le boîtier (2) avec un espace intérieur (7) pour recevoir le produit à râper,
• un disque à trancher (3) disposé de façon solidaire en rotation par rapport au boîtier (2),
• un entraîneur (8), qui est disposé dans l'espace intérieur (7) du logement (5) et à l'extérieur de l'axe de rotation (6) de façon solidaire en rotation avec le logement,
le logement (5) étant placé à l'intérieur du boîtier (2), autour d'un axe de rotation (6) s'étendant à travers l'axe central traversant l'espace intérieur (7) du boîtier (2) cylindrique creux (6) par rapport au boîtier (2) et donc de façon rotative par rapport au disque à trancher (3) et un piston (9) faisant office de piston de pression étant insérable de façon ajustée dans le logement (5) pour la transmission de forces de rotation, **caractérisée en ce que**
l'entraîneur est formé (8) par un méplat sur la forme de base de l'espace intérieur (7) et **en ce que** l'espace intérieur est exempt de composants dans la zone de l'axe de rotation.

2. Râpe (1) selon la revendication 1, **caractérisée en ce que** le logement (5) comporte un seul espace intérieur (7) pour recevoir le bien à râper.

3. Râpe (1) selon l'une quelconque des revendications 1 ou 2, **caractérisée en ce que** l'espace intérieur (7) présente une section transversale circulaire et **en ce que** l'entraîneur (8) s'étend le long d'une sécante vers la section transversale circulaire.

4. Râpe (1) selon l'une quelconque des revendications 1 ou 2, **caractérisée en ce que** l'espace intérieur (7) présente une forme de base polyédrique.

5. Râpe (1) selon l'une quelconque des revendications 1 à 4, **caractérisée en ce que** l'entraîneur (8) est conçu en tant que paroi du logement (5).

6. Râpe (1) selon l'une quelconque des revendications 1 à 5, **caractérisée en ce que** l'entraîneur (8) est disposé sur un niveau d'entraînement, qui est parallèle au niveau à travers lequel s'étend l'axe de rotation (6).

7. Râpe (1) selon l'une quelconque des revendications 1 à 6, **caractérisée en ce que** l'entraîneur (8) est disposé de sorte que plus de 60 %, de préférence plus de 70 %, particulièrement plus de 80%, de façon particulièrement préférée plus 90% de la forme de base de l'espace intérieur (7) soit disponible pour recevoir le produit à râper.

8. Râpe (1) selon l'une quelconque des revendications 1 à 7, **caractérisée en ce que** l'entraîneur (8) est dimensionné de sorte à s'étendre sur l'ensemble de l'extension longitudinale du logement (5).

9. Râpe (1) selon l'une quelconque des revendications 1 à 8, **caractérisée en ce que** l'entraîneur (8) est amovible.

10. Râpe (1) selon l'une quelconque des revendications 1 à 9, **caractérisée en ce que** le piston (9) est réalisé en version creuse.

11. Râpe (1) selon l'une quelconque des revendications 1 à 9, **caractérisée en ce que** le piston (9) est réalisé sous la forme de contenant de réserve et/ou de contenant de saupoudrage.
